(19) Europäisches Patentamt

European Patent Office (11) Veröffentlichungsnummer: **0 073 462**
**B1**
Office européen des brevets

(12) **EUROPÄISCHE PATENTSCHRIFT**

(45) Veröffentlichungstag der Patentschrift: (51) Int. Cl.⁴: **H 04 Q 3/00**
**10.12.86**

(21) Anmeldenummer: **82107768.2**

(22) Anmeldetag: **24.08.82**

(54) Teilnehmeranschlussschaltung.

(30) Priorität: **27.08.81 DE 3133934**

(43) Veröffentlichungstag der Anmeldung:
**09.03.83 Patentblatt 83/10**

(45) Bekanntmachung des Hinweises auf die Patenterteilung:
**10.12.86 Patentblatt 86/50**

(84) Benannte Vertragsstaaten:
**AT CH FR GB IT LI NL SE**

(56) Entgegenhaltungen:
**EP - A - 0 048 940**
**US - A - 4 164 713**

(73) Patentinhaber: **Siemens Aktiengesellschaft Berlin und München, Wittelsbacherplatz 2, D-8000 München 2 (DE)**

(72) Erfinder: **Kopetzky, Horst, Lannerstrasse 11, D-8025 Unterhaching (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Teilnehmeranschlussschaltung mit Mitteln für die Überwachung des Anreizzustandes, der Teilnehmerschleifenunterbrechungen auf Grund der Wahl und des Auslösens, sowie für die Überwachung des Schleifenschlusses als Folge eines Rufs, die über einen Spannungsteiler an die beiden Adern der Teilnehmeranschlussleitung angeschlossen sind, ferner mit einer Mehrzahl von Speisewiderständen für die Zufuhr des Speisestroms an die Teilnehmeranschlussleitung, die je nach Art der vorzunehmenden Überwachung entweder alle als solche wirksam geschaltet sind oder aber zum Teil lediglich als Bestandteile der Spannungsteiler dienen.

Bei einer vorgeschlagenen Teilnehmeranschlussschaltung (DE-A-3 036 686, welche der EP-A-48 940 mit Priorität vom 29.9.80 und Veröffentlichungsdatum 7.4.82 entspricht) sind zwei teilnehmerindividuelle Auswerteeinrichtungen vorgesehen, von denen die eine der Überwachung des Anreizzustandes, der Teilnehmerschleifenunterbrechung auf Grund der Wahl und des Auslösens und die andere der Überwachung des Schleifenschlusses als Folge eines Rufs dient.

Die letztgenannte Auswerteeinrichtung ist über zwei Spannungsteiler mit demselben Teilerverhältnis an die b-Ader der Teilnehmeranschlussleitung angeschlossen, wobei der eine Spannungsteiler einen zu seinen übrigen Spannungsteilerwiderständen in Reihe liegenden Kondensator enthält. Solange die Teilnehmerleitungsschleife in der Rufphase geöffnet ist, auf der Teilnehmerleitung also lediglich die Rufwechselströme fliessen, werden der invertierende und nichtinvertierende Eingang des Komparators, der diese Auswerteeinrichtung bildet, von Wechselspannungen derselben Amplitude beaufschlagt, die sich damit kompensieren, was bedeutet, dass die Rufwechselspannung in diesem Fall ohne Auswirkungen auf die Auswerteeinrichtung bleibt. Wenn bei Schleifenschluss dem Rufwechselstrom der Speisestrom überlagert ist, nehmen die Potentiale an den Eingängen des Komparators der Auswerteeinrichtung unterschiedliche Werte an, da der Gleichstromanteil des Stroms auf der Teilnehmeranschlussleitung auf dem einen Eingang wegen des genannten Kondensators keinen Einfluss haben kann.

Das dem einen Eingang des Komparators vorgeschaltete RC-Glied bewirkt allerdings eine gewisse Ansprechverzögerung der Auswerteeinrichtung, was unerwünscht ist, da die Anzeige von Schleifenschluss im Falle eines Rufs besonders schnell erfolgen muss, um verhindern zu können, dass der dann über das Mikrofon der Teilnehmerstation fliessende Summenstrom aus Speisestrom und Rufstrom zu einer Beschädigung führt.

Wenn auf Grund eines Fehlers ein Erdschluss der b-Ader vorliegt, dann kann bei einer vorgeschlagenen Teilnehmeranschlussschaltung ein Schleifenschluss durch die an diese Leitungsader angeschlossene Auswerteeinrichtung nicht mehr erkannt werden, was die Gefahr, dass das Mikrofon durch einen Überstrom während der Rufphase geschädigt wird, durch den dann erhöhten Speisestrom noch grösser macht.

Es ist auch schon eine Teilnehmeranschlussschaltung bekannt (US-A-4 164 713), bei der nur eine einzige teilnehmerindividuelle Auswerteeinrichtung vorhanden ist. Diese Auswerteeinrichtung ist zwischen zwei Betriebszuständen umschaltbar, von denen der eine ausschliesslich der Indikation des Schleifenschlusses auf Grund eines Rufs dient. In diesem Betriebszustand ist mit derselben Zielsetzung wie der bei der zweiten Auswerteeinrichtung des vorgenannten Vorschlags dem einen Eingang der Auswerteeinrichtung ein Kondensator vorgeschaltet, der genau wie dort zu einer Ansprechverzögerung bei dieser Art von Indikation führt.

Die Aufgabe der vorliegenden Erfindung ist es daher, eine Teilnehmeranschlussschaltung anzugeben, die in den vorgenannten Punkten günstiger ist als die Teilnehmeranschlussschaltungen des Standes der Technik.

Diese Aufgabe wird mit einer Teilnehmeranschlussschaltung der eingangs genannten Art erfindungsgemäss dadurch gelöst, dass eine solche Teilnehmeranschlussschaltung für die genannten Überwachungen eine einzige Indikationsschaltung vorgesehen ist, und dass der Einspeisepunkt für den Teilnehmerspeisestrom und den ihm überlagerten Rufwechselstrom während der Rufphase, sowie die bei der Überwachung des Schleifenschlusses als Folge eines Rufs wirksamen Spannungsteilerverhältnisse so gewählt sind, dass bei offener Teilnehmerleitungsschleife die an die Eingänge der Auswerteeinrichtungen gelangenden Rufwechselspannungsanteile einander kompensieren.

Bei der erfindungsgemässen Teilnehmeranschlussschaltung ist ein schnelles Ansprechen der Auswerteeinrichtung auch bei der Überwachung des Teilnehmerschleifenschlusses auf Grund eines Rufs gewährleistet, da hier das erwähnte RC-Glied vermieden ist und darüber hinaus liefert die Auswerteeinrichtung auch dann eine Schleifenschlussanzeige, wenn bei der a-Ader der Teilnehmeranschlussleitung ein Erdschluss vorliegt.

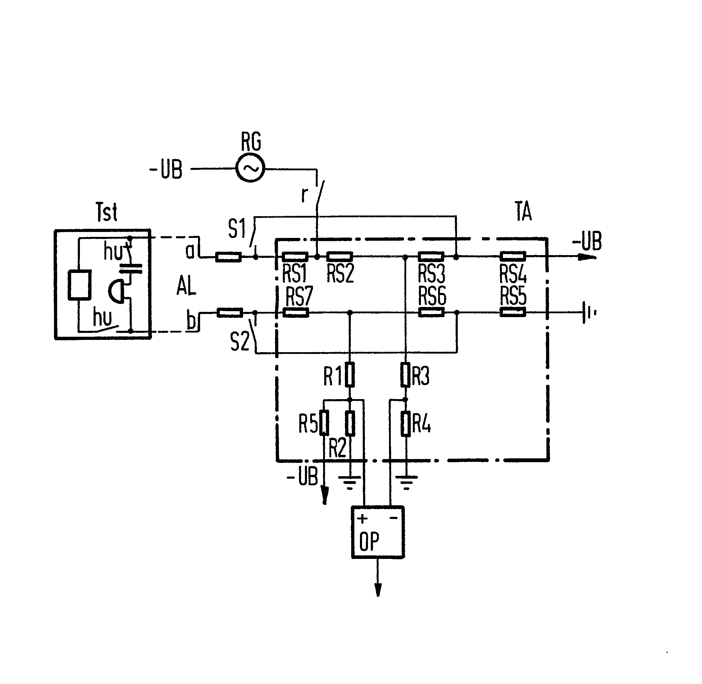

Nachstehend wird die Erfindung anhand eines Ausführungsbeispiels unter Bezugnahme auf die Zeichnung, die eine erfindungsgemässe Teilnehmeranschlussschaltung zeigt, näher erläutert.

In der Figur ist eine Teilnehmerstation Tst angedeutet, die über die Adern a, b einer Teilnehmeranschlussleitung mit der ihr zugeordneten Teilnehmeranschlussschaltung TA verbunden ist.

Diese Teilnehmeranschlussschaltung enthält unter anderem eine Speisebatterie, die die Speisespannung UB liefert, sowie Speisewiderstände RS1 bis RS7, über die die Speisespannung an die Teilnehmeranschlussleitung AL gelegt wird. Die Speisewiderstände RS1 bis RS3 sowie RS6 und RS7 sind jeweils durch Betätigung der Schalter S1 bzw. S2 überdrückbar. Wenn die Schalter S1 und S2 geschlossen sind, sind daher lediglich noch die Widerstände RS4 und RS5 als Speisewiderstände wirksam geschaltet, d.h., es kann eine Umschaltung zwischen hochohmiger und niederohmiger Speisung erfolgen.

Als Auswerteeinrichtung enthält die dargestellte Teilnehmeranschlussschaltung einen Komparator in Form eines Operationsverstärkers OP. Der nichtinvertierende Eingang des Operationsverstärkers ist an den Verbindungspunkt der Widerstände R1 und R2 angeschlossen, die einen Spannungsteiler bilden, der zwischen Bezugspotential und dem Verbindungspunkt der Widerstände RS6 und RS7 liegt, über die eine Verbindung der Speisebatterie mit der b-Ader der Teilnehmeranschlussleitung hergestellt wird. Über einen weiteren Widerstand R5, der an Speisebatteriepotential UB liegt, wird dieser nichtinvertierende Eingang im Hinblick auf eine entsprechende Ansprechschwelle des Operationsverstärkers entsprechend vorgespannt. Der invertierende Eingang des Operationsverstärkers OP ist an den Verbindungspunkt der Widerstände R3 und R4 angeschlossen, die einen Spannungsteiler bilden, der zwischen Bezugspotential und dem Verbindungspunkt der Widerstände RS2 und RS3 liegt, über die eine Verbindung zwischen der Speisebatterie und der a-Ader der Teilnehmeranschlussleitung hergestellt ist.

Wenn eine Überwachung der Teilnehmeranschlussleitung AL auf den Anreizzustand vorgenommen werden soll, sind die Schalter S1 und S2 geöffnet, was bedeutet, dass sämtliche Speisewiderstände RS1 bis RS7 wirksam geschaltet sind.

Wegen der vorerwähnten Vorspannung des Operationsverstärkers OP und auf Grund eines dann vorliegenden entsprechenden Spannungsteilerverhältnisses wechselt in diesem Fall der Operationsverstärker seinen Schaltzustand wenn bei der Teilnehmerstation Tst durch Abnehmen des Handapparates die Teilnehmerleitungsschleife geschlossen wird. Dieser Übergang von einem Schaltzustand in den anderen wird dann in nicht näher erläuterter Art und Weise als Anreiz für dem Verbindungsaufbau dienende Vorgänge ausgenutzt.

Wenn hingegen die Teilnehmerleitungsschleife auf Schleifenunterbrechungen auf Grund der Wahl und beim Auslösen überwacht werden soll, müssen die Schalter S1 und S2 geschlossen sein, so dass lediglich noch die Speisewiderstände RS4 und RS5 als Speisewiderstände wirksam geschaltet sind. Die als Speisewiderstände nicht ausgenutzten Widerstände RS7 sowie RS1 und RS2 bilden jetzt Teile der Spannungsteiler, zu denen sonst noch die Widerstände R1, R2, R5 bzw. R3 und R4 gehören. Die Spannungsteiler, an denen die Eingangsspannungen für den Operationsverstärker OP abgegriffen werden, weisen nun also ein anderes Teilerverhältnis als im vorgenannten Betriebsfall auf, so dass, wie gewünscht, bei Schleifenunterbrechungen der Operationsverstärker von einem Schaltzustand in den anderen übergeht was wiederum als Überwachungskriterium ausgenutzt wird.

Während der Rufphase eines Teilnehmerrufs ist der Schalter r geschlossen, so dass die vom Rufgenerator RG gelieferte Rufwechselspannung, der die Speisespannung UB überlagert ist, am Verbindungspunkt der Widerstände RS1 und RS2 eingespeist wird. Der Schalter S1 wird alternativ zum Kontakt r betätigt, ist also während dessen Schliessung geöffnet, wogegen der Schalter S2 während der ganzen Rufzeit geschlossen bleibt.

Solange während der Rufeinspeisung die Teilnehmerleitungsschleife noch nicht geschlossen ist, fliesst ein Teil des Wechselstromanteils des am Verbindungspunkt der Widerstände RS1 und RS2 eingespeisten Stromes über die Widerstände RS2, R3 und R4 ab und beeinflusst damit den invertierenden Eingang des Operationsverstärkers, zum anderen Teil fliesst er über den Widerstand RS1, die a-Ader der Teilnehmeranschlussleitung, den Wechselstromweg der Teilnehmerstation Tst, bestehend aus dem Weckerkondensator C und dem Wecker W, die b-Ader sowie über die Widerstände RS7, R1 und R2. Das Spannungsteilerverhältnis des für den invertierenden Eingang des Operationsverstärkers massgeblichen Spannungsteilers ist nun ein anderes als bei den vorgenannten Betriebsfällen und so gewählt, dass die beiden Anteile des Rufwechselstroms die Operationsverstärkereingänge gerade im selben Masse beeinflussen, sich also kompensieren. Damit ist sichergestellt, dass bei geöffneter Teilnehmerleitungsschleife die Rufwechselspannung nicht fälschlicherweise zu einer Schleifenschlussanzeige führen kann.

Wenn während der Rufphase des Rufs, solange also der Kontakt r geschlossen ist, der Handapparat abgehoben und damit die Teilnehmerschleife geschlossen wird, besteht über die Teilnehmerstation ein Gleichstromweg mit der Folge eines entsprechend veränderten Spannungsabfalls über dem mit dem nichtinvertierenden Eingang des Operationsverstärkers in Verbindung stehenden Spannungsteiler, so dass die Auswerteeinrichtung nunmehr anspricht, also einen Schleifenschluss anzeigt.

Während der Rufpause im Verlaufe eines Rufs, wenn also der Kontakt r geöffnet und die beiden Schalter S1 und S2 geschlossen sind, liegen dieselben Strom- und Potentialverhältnisse vor wie beim zuvor geschilderten Betriebszustand der Überwachung von Schleifenunterbrechungen bei der Wahl, mit der Folge, dass beim Übergang von geöffneter Teilnehmerschleife zur geschlossener Teilnehmerschleife ein Zustandswechsel am Ausgang der Auswerteeinrichtung auftritt, der ebenfalls zu einer endgültigen Abschaltung des Rufspannungsgenerators RG führt.

**Patentanspruch**

Teilnehmeranschlussschaltung mit Mitteln für die Überwachung des Anreizzustandes, der Teilnehmerschleifenunterbrechungen auf Grund der Wahl und des Auslösens, sowie für die Überwachung des Schleifenschlusses als Folge eines Rufs, die über einen Spannungsteiler an die beiden Adern (a, b) der Teilnehmeranschlussleitung (AL) angeschlossen sind, ferner mit einer Mehrzahl von Speisewiderständen (RS1 bis RS7 für die Zufuhr des Speisestroms an die Teilnehmeranschlussleitung, die je nach Art der vorzunehmenden Überwachung entweder alle als solche wirksam geschaltet sind oder aber zum Teil lediglich als Bestandteile der Spannungsteiler dienen, dadurch gekennzeichnet, dass für die genannten Überwachungen eine einzige Indikationsschaltung (OP) vorgesehen ist, und dass der Einspeisepunkt für den Teilnehmerspeisestrom und den ihm überlagerten Rufwechselstrom während der Rufphase sowie die bei der Überwachung des Schleifenschlusses als Folge eines Rufs wirksamen Spannungsteilerverhältnisses so gewählt sind, dass bei offener Teilnehmerleitungsschleife die an die Eingänge der Auswerteeinrichtung (OF) gelangenden Rufwechselspannungsanteile einander kompensieren.

## Claim

A subscriber line circuit with means for monitoring the excitation state and subscriber loop interruptions as a result of dialling and clearance and for monitoring loop closure as a result of a call, connected via a voltage divider to the two wires (a, b) of the subscriber connection line (AL), and with a plurality of feed resistors (RS1 to RS7) to supply feed current to the subscriber connection line depending upon the type of monitoring to be carried out, either all actuated or some as parts of the voltage dividers, characterised in that one single indication circuit (OP) is provided for the aforementioned monitoring functions and that the feed-in point for the subscriber feed current and the ringing a.c. superimposed thereupon during the ringing phase, and similarly the voltage divider ratio operative during the monitoring of loop closure as a result of a call, are selected to be such that when the subscriber line loop is open the ringing a.c. voltage components which reach the inputs of the analysis device (OP) compensate one another.

## Revendication

Circuit de raccordement d'abonné comportant des moyens pour contrôler l'état d'excitation, les interruptions de la boucle d'abonné sur la base de la sélection et la libération, ainsi que pour contrôler la fermeture de boucle par suite d'un appel, ces moyens étant raccordés par l'intermédiaire d'un diviseur de tension aux deux conducteurs (a, b) de la ligne d'abonné (AL), et en outre une multiplicité de résistances d'alimentation (RS1 à RS7) qui sont prévues pour l'envoi du courant d'alimentation à la ligne d'abonné et qui, en fonction du contrôle devant être exécuté, sont soit toutes branchées en tant que telles à l'état actif, soit servent en partie uniquement en tant que composants des diviseurs de tension, caractérisé par le fait que pour les contrôles indiqués il est prévu un seul circuit indicateur (OP) et que le point d'injection du courant d'alimentation d'abonné et du courant alternatif d'appel, qui lui est superposé, pendant la phase d'appel et les rapports des diviseurs de tension, qui sont actifs lors du contrôle de la fermeture de boucle par suite d'un appel, sont choisis de telle sorte que lorsque la boucle de la ligne d'abonné est ouverte, les composantes de la tension alternative d'appel, qui parviennent aux entrées du dispositif d'évaluation (OP) se compensent mutuellement.